# EUROPÄISCHE PATENTSCHRIFT

(11) **EP 1 501 045 B1**
(45) Veröffentlichungstag und Bekanntmachung des Hinweises auf die Patenterteilung: **14.11.2007**
(21) Anmeldenummer: 04025442.7
(22) Anmeldetag: 27.09.1990
(51) Int. Cl.: G06K 19/16, G06K 19/06, B42D 15/10

(54) **Optisch variables Element mit nichtholographischen Daten und Verfahren zu seiner Herstellung**
Optically variable element with non-holographic data and its production method
Elément optiquement variable comportant des données sans informations holographiques et procédé de sa fabrication

(30) Priorität: 28.09.1989 DE 3932505
(43) Veröffentlichungstag der Anmeldung: 26.01.2005
(62) Teilanmeldung aus: 02006489.5
(73) Patentinhaber: Giesecke & Devrient GmbH, 81677 München (DE)
(72) Erfinder: Heckenkamp, Christoph, 64665 Alsbach (DE); Stenzel, Gerhard, 80686 München (DE); Kaule, Wittich, 82275 Emmering (DE)
(74) Vertreter: Klunker . Schmitt-Nilson . Hirsch

(56) Entgegenhaltungen:
- DE-A- 2 601 693
- DE-A- 3 048 733
- DE-C- 3 151 407
- US-A- 4 856 857
- PATENT ABSTRACTS OF JAPAN Bd. 0103, Nr. 89 (P-531), 26. Dezember 1986 (1986-12-26) & JP 61 176968 A (DAINIPPON PRINTING CO LTD), 8. August 1986 (1986-08-08)

## Beschreibung

Die Erfindung betrifft ein optisch variables Element mit Beugungsstrukturen zur Aufbringung auf Datenträger im Transferverfahren.

Optisch variable Elemente sind seit einigen Jahrzehnten in verschiedenen Ausführungsformen bekannt. Gemeinsam ist diesen Elementen, daß sie je nach Betrachtungs- und Beleuchtungswinkel unterschiedliche optische Effekte zeigen. Eine besondere Klasse von optisch variablen Elementen beruht auf Beugungseffekten. Hierzu zählen lineare oder strukturierte Beugungsgitter, holografische Aufzeichnungen, Kinegramme und dergleichen.

Optisch variable Elemente finden in den unterschiedlichsten Gebieten Verwendung, z. B. in der Werbebranche, im Dekorationsbereich, aber auch zur Echtheitskennzeichnung von Datenträgern. Durch die gerade in letzter Zeit ganz erheblich gestiegene optische Qualität finden Hologramme, Kinegramme, Beugungsgitter etc. im Sicherheitsbereich, beispielsweise für Kreditkarten, Ausweiskarten, Banknoten, Sicherheitsdokumentë usw., immer mehr Zuspruch. Die steigende Beliebtheit hat im wesentlichen zwei Gründe. Erstens erfüllen derartige Elemente die traditionell üblichen Sicherheitsanforderungen für human prüfbare Echtheitsmerkmale, das ist ein hoher Aufwand zur Herstellung und Nachahmung, geringe Verfügbarkeit der Technologie sowie eine eindeutige Überprüfbarkeit ohne zusätzliche Hilfsmittel. Zum zweiten entsprechen die Elemente dem neuesten Stand der Technik, wodurch sie dem zugeordneten Produkt einen modernen, hochtechnischen Charakter verleihen.

In der Patentliteratur und in der praktischen Anwendung im Sicherheitsbereich wurden derartige Elemente bisher in verschiedenen Versionen bekannt.

Bereits sehr früh nach dem Erscheinen der ersten Hologramme wurde vorgeschlagen, Ausweiskarten, Kreditkarten und dergleichen vor Nachahmung und Verfälschung dadurch zu schützen, daß die personenbezogenen Daten des Kartenbenutzers neben der üblichen fotografischen und/oder schriftlichen Form noch einmal holografisch in dem Hologramm auf der Karte gespeichert werden. Ein Vergleich zwischen den herkömmlichen Kartendaten und den im Hologramm gespeicherten Daten sollte ihre Richtigkeit nachweisen. Aus der Vielzahl der Veröffentlichungen hierzu seien die DE-OS 25 01 604, die DE-OS 25 12 550 und die DE-OS 25 45 799 stellvertretend genannt.

Obwohl im Rahmen der traditionellen Sicherheitsphilosophie der Aufwand für die Herstellung von Echtheitsmarkmalen wunschgemäß hoch sein soll, gilt dies jedoch in erster Linie für den Anschaffungswert und die geringe Verfügbarkeit der notwendigen Produktionseinrichtungen. Die Herstellung der in großen Mengen zu' produzierenden Echtheitsmerkmale selbst sollte auf diesen relativ teuren Produktionsanlagen allerdings in wirtschaftlicher Form möglich sein.

Bei verschiedenen Hologrammarten ist die Erstellung des jeweils ersten Hologramms relativ aufwendig und kostspielig. Die Herstellung von Duplikaten ist dagegen zu einem Bruchteil dieser "Erstkosten" möglich.

Als nachteilig erweist es sich demnach bei den o.g. Ausführungsformen, daß die Herstellung der Hologramme nicht nur auf sehr kostspieligen technischen Anlagen zu erfolgen hat, sondern auch für jede Karte eigene Hologramme mit individuellen Informationen (Personalisierungsdaten) zu fertigen sind, so daß der technische Aufwand zur Erstellung dieser Einzelhologramme (Unikate) stets relativ hoch ist. Eine Reduzierung der Kosten durch Verlagerung des Aufwandes in die Produktionsvorrichtungen ist nur in sehr geringem Maß möglich. Aufgrund dieser nachteiligen Randbedingungen ist der Einsatz von Hologrammen mit holografisch gespeicherten kartenindividuellen Daten unter wirtschaftlichen Gesichtspunkten nicht vertretbar.

Je nach Typ des Datenträgers oder des holografischen Standardelements verwendet man unterschiedliche Techniken. Ohne Anspruch auf Vollständigkeit sind zu nennen:
- direktes Aufprägen der Hologrammstruktur auf Aufzeichnungsträger, deren Oberflächenbeschaffenheit dies zuläßt, z. B. auf Kunststoffmaterialien,
- das Heißsiegeln oder Aufkleben von auf einem Zwischenträger realisierten Hologrammen auf den eigentlichen Aufzeichnungsträger, der eine Papier- oder Kunststoffoberfläche aufweisen kann, z. B. Banknote, Wertpapier, Ausweiskarte etc.,
- das Einkaschieren oder Einmontieren von auf Zwischenträgern vorgesehenen Hologrammen in das Innere eines Schichtaufbaus mehrschichtiger Aufzeichnungsträger,
- das Einlagern von Sicherheitsfäden oder Planchetten mit holografischen Beugungsstrukturen in Papier während des Papier-Herstellungsprozesses.

Der heute am häufigsten eingesetzte Prozeß zur Herstellung und Aufbringung von Standardhologrammen auf Datenträger ist der Transfer von Prägehologrammen auf Ausweiskarten. Aus diesem Grund werden der Herstellprozeß und die individualisierenden Maßnahmen beispielhaft anhand dieser Technik vorgestellt. Die wesentlichen Verfahrensschritte sind hierbei das Anfertigen eines Masterhologramms, die Herstellung von Hologrammkopien und das Aufbringen auf das spätere Produkt.

Die Anfertigung des Masters erfolgt in der Regel in manueller Einzelfertigung mit einer sehr teuren Ausrüstung. Entsprechend ist das Masterhologramm mit hohen Kosten belastet. Die Herstellung der Kopien und das Aufbringen auf die Deckfolien der Karten sind maschinell mit hoher Geschwindigkeit und damit relativ kostengünstig durchführbar. Aufgrund dieser Kostenstruktur ist man bestrebt, durch Anfertigen einer möglichst hohen Anzahl von identischen Kopien die Fixkosten pro Hologramm niedrig zu gestalten. Der Zwang zur Massenproduktion führt somit auf dem Sicherheitsbereich, insbesondere auf dem Kartensektor, zu Einschränkungen hinsichtlich des holografischen Fälschungsschutzes.

Zur Reduzierung der für die Hologrammherstellung anfallenden Kosten wurden in diesem sinne nun Ausführungsformen bekannt, die zwar Hologramme als Echtheitsmerkmal verwenden, bei denen die im Hologramm gespeicherten Daten aber nicht benutzerindividualisiert sind, sondern lediglich eine auf den Kartenausgeber bezogene Individualität aufweisen (Standardhologramme). In diesem Sinne unterscheiden sich zwar die Hologramme unterschiedlicher Kartensysteme voneinander, die Hologramme der einzelnen Karten eines Systems sind jedoch identisch.

Durch die Verwendung von Standardhologrammen (d. h. Duplikate eines Master-Hologramms) für ein Kartensystem wurde es nun möglich, die relativ hohen Fixkosten, die für die holografische Aufnahmetechnik anfallen, auf eine hohe Anzahl von Karten zu verteilen. Je nach Umfang der Kartenserie verteilen sich die Kosten somit unter Umständen auf so große Stückzahlen, daß für den Preis des einzelnen Hologramms im wesentlichen nur noch die Duplizierungskosten zu Buche schlagen. Aufgrund dieser Tatsache wurden Hologramme erstmals als Massenprodukt im Sicherheitsbereich wirtschaftlich einsetzbar.

Neben den allgemein bekannten Anwendungen im Euroschecksystem sowie bei den VISA- und Mastercard-Kreditkarten sind stellvertretend für diese Anwendungsvarianten die Patentschriften DE-OS 33 08 831 sowie die EP-PS 0 064 067 zu nennen.

Bekanntermaßen sind die in den derzeit praktizierten Kreditkartensystemen verwendeten Hologramme sogenannte Prägehologramme, bei denen eine Vervielfältigung mittels Prägematrizen möglich ist. Obwohl ein Großteil der Herstellungskosten für die holografische Aufnahmetechnik anfällt, sind die für die Vervielfältigung der Hologramme in der Serienproduktion zu veranschlagenden Kosten doch noch immer so hoch, daß eine wirtschaftliche Herstellung nur dann möglich ist, wenn die für die Aufnahmetechnik und die Herstellung des Hologramm-Masters notwendigen Kosten auf Serien mit vielen Millionen Stück umlegbar sind. Die Produktion von Kleinserien, das heißt wenige zehntausend bis hunderttausend Karten verbietet sich aus finanziellen bzw. wirtschaftlichen Gründen demnach meist noch immer.

Bei der Verwendung gleicher Hologramme innerhalb einer Kartenserie wird zwar erreicht, daß Karten eines Systems besser von Karten eines anderen zu unterscheiden sind; die Fälschung von Karten wird damit jedoch nicht völlig ausgeschlossen, da durch Ausstanzen derartiger Hologramme und Übertragen auf andere Karten Manipulationen noch immer möglich sind. Es gibt zwar Maßnahmen, die derartige . Manipulationen erschweren sollen, in dem die den Kartenbenutzer betreffenden Hochprägedaten teilweise oder auch vollständig in den Hologrammbereich verlagert werden. Bekanntermaßen sind die Hochprägedaten aber rückprägbar, wodurch derartige Manipulationen in der Praxis zwar für Fachleute, aber nicht für Laien erkennbar sind. Das Vorsehen von kartenindividuellen Hochprägedaten im Bereich des Standardhologrammes bietet somit keinen echten Schutz vor Übertrag auf andere Karten.

Zur Vermeidung auch derartiger Probleme ist in der AT-PS 334 117 die Anwendung von Standardhologrammen zur benutzerbezogenen Individualisierung von Karten beschrieben. Gemäß diesem Vorschlag wird die Kartenindividualisierung durch die Kombination von mehreren Standardhologrammen ermöglicht, die jeweils für sich eine bestimmte Information enthalten, z. B. Buchstaben oder Zahlen, und die durch eine entsprechende Kombination auf den einzelnen Karten eines Systems unterschiedliche Daten, wie z. B. Worte, mehrziffrige Nummern etc., repräsentieren. Durch Aufprägen derartiger Hologramme mit Hilfe eines Standardsatzes von Prägestempeln ist die einfache und kostengünstige Herstellung individueller holografischer Kartendaten möglich.

Da mit dieser Variante vorwiegend alphanumerische Daten aufgebracht werden, aber insbesondere bildmäßige Daten nur bedingt wiederzugeben sind, ist der Gesamteindruck derartiger Hologramme visuell wenig effektvoll, weshalb eine Durchsetzung dieser Individualisierung im Markt bisher nicht möglich war.

Eine weitere Variante der Individualisierung von Dokumenten unter Einbeziehung von Hologrammen ist in der DE-OS 25 55 214 beschrieben: In dieser Ausführungsform wird vorgeschlagen, Beugungsstrukturen in Form von numerischen oder alphanumerischen Schriftzeichen auf einem Dokument aufzubringen. Hierbei wird eine thermoplastische Druckfarbe in Form von Ziffern auf ein Papiersubstrat gedruckt, anschließend wird mit einem großflächigen Stempel die Beugungsstruktur eingeprägt.

Diese Variante eignet sich aber nicht für mehrschichtige Hologrammtypen, die wegen der innenliegenden und damit geschützten Beugungsstruktur zur Herstellung von Datenträgern besonders bevorzugt werden.

In der DE 26 01 693 wird ein Dokument beschrieben, das einen Informationsträger mit einer Vielzahl von holographischen Feldern aufweist, die individuell ausgelöscht oder verändert werden können. Auf diese Weise entsteht eine codierte binäre Information, die maschinenlesbar ist.

Aus der DE 31 51 407 C1 ist eine mehrschichtige Ausweiskarte bekannt, in die Informationen in Form von Mustern mittels eines Laserstrahlschreibers eingeschrieben werden können. Durch die Energie des Laserstrahls werden Schichten der Ausweiskarte partiell zerstört.

Der Stand der Technik zeigt, daß die in der Sicherheitstechnik bestehenden Bedürfnisse und die Realisierbarkeit wirtschaftlich vertretbarer Lösungen bisher keinen gemeinsamen Nenner gefunden haben.

Ausgehend von dieser allgemeinen Ansicht und dem damit verbundenen Stand der Technik liegt der Erfindung deshalb die Aufgabe zugrunde, Beugungsstrukturelemente und insbesondere Hologrammvarianten und Herstellverfahren hierfür vorzuschlagen, die einen den jeweiligen Sicherheitsaspekten angepaßten Individualisierungsgrad der Hologramme und damit einen möglichst breiten Schutz der Daten und Dokumente erlauben und zugleich die Kostenvorteile der Serienproduktion von Standardhologrammen bieten.

Diese Aufgabe wird durch die im Kennzeichen des Hauptanspruchs genannten Merkmale gelöst. Weiterbildungen sind in den untergeordneten Ansprüchen genannt.

Der Kern der Erfindung ist darin zu sehen, daß die stets aus mehreren Einzelschritten bestehende Herstellung von Hologrammen bzw. Hologrammkarten und dergleichen in einer geeigneten Phase unterbrochen wird, in der ohne wesentliche Einschränkung oder Behinderung der Serienfertigung diese durch gezielte individualisierende Maßnahmen modifiziert oder personalisiert werden. Je nach dem bei welchem Herstellungsschritt die Modifikation vorgesehen ist, sind trotz Verwendung gleicher Hologramm-Master am Endprodukt (der Hologrammkarte) sehr unterschiedliche Hologramm-Ausführungsformen erreichbar. Das Spektrum der Individualisierung reicht dabei von einer für Kleinserien interessanten, im Aussehen vom Standard-Hologramm abweichenden Untermenge gleicher Hologramme bis zu einer vollkommenen Personalisierung, bei der die Standardhologramme zu echten Unikaten umgestaltet werden.

Für die Herstellung von Hologrammen ist die Nutzung unterschiedlichster Technologien notwendig wie holographische Aufnahmetechnik, Vervielfältigung auf ein Serienhalbzeug, Verbindung oder Einbringung auf den Datenträger etc.. Fügt man die individualisierenden Maßnahmen jeweils in den Verfahrensschritten ein, bei denen die Hologrammherstellung von einer Technologie zur anderen überwechselt, sind diese Maßnahmen relativ einfach in den Verfahrensablauf der Hologramm-Herstellung zu integrieren und ermöglichen dies meist ohne große Eingriffe in den eigentlichen Herstellprozeß und deren Produktionseinrichtungen..

Das erfindungsgemäße Grundpinzip wird im folgenden beispielsweise anhand von Prägehologrammen erläutert, die als Halbzeug auf sogenannten Transferbändern vorgefertigt und im Transferverfahren auf die eigentlichen Datenträger übertragen werden. Dieses Verfahren eignet sich für die Realisierung der Erfindung besonders gut, da dabei die unterschiedlichen technologischen Bereiche, welche für die Herstellung der Masterhologramme, der Standardhologramme (Duplikate), der zu schützenden Datenträger sowie dem Hologrammtransfer auf dem Datenträger besonders klar voneinander getrennt sind. Die Verwendung der erfindungsgemäßen Grundgedanken bei der Nutzung von Volumenhologrammen, Kinegrammen etc. ist sinngemäß aber ebenso möglich, wenn auch nicht immer in der bei Präge-Transferhologrammen möglichen Variationsbreite.

Als besonders vorteilhaft erweist es sich, daß mit dem erfindungsgemäß vorgeschlagenen Verfahren alle wirtschaftlichen Vorteile der Großserienfertigung von Hologrammen sowohl für einzeln individualisierte Hologramme als auch für Kleinserien gleicher Hologramme in gleicher Weise nutzbar sind; zugleich läßt sich aufgrund der Integration der individualisierenden Maßnahmen in den Herstellungsprozeß die Individualisierung irreversibel gestalten- Je nach Art des Eingriffs in den Verfahrensablauf sowie durch Kombination verschiedener Individualisierungsmaßnahmen, lassen sich, ausgehend vom gleichen Master, unterschiedlichste Elementvariationen erstellen. Durch die genannten Verfahren läßt sich schließlich eine Vorabproduktion von standardmäßig vorbereiteten Halbzeug erstellen, das je nach Anwendungsfall beliebig später in den anschließenden Verfahrensschritten individualisiert und/oder fertiggestellt wird.

Weitere Vorteile und Merkmale der Erfindung ergeben sich aus der Figur und den nachfolgenden Ausführungsbeispielen.

Es zeigen
- Fig. 1: die wesentlichen Verfahrensschritte bei der Herstellung und des Transfers von Prägehologrammen auf Datenträger,
- Fig. 2: die Untergliederung der in Fig. 1 dargestellten Verfahrensabschnitte,
- Fig. 3: den Schichtaufbau eines Transferbandes,
- Fig. 4: den Schichtaufbau eines fertigen Hologramms auf einem Substrat;
- Fig. 5: ein Transferband, das perforiert ist.

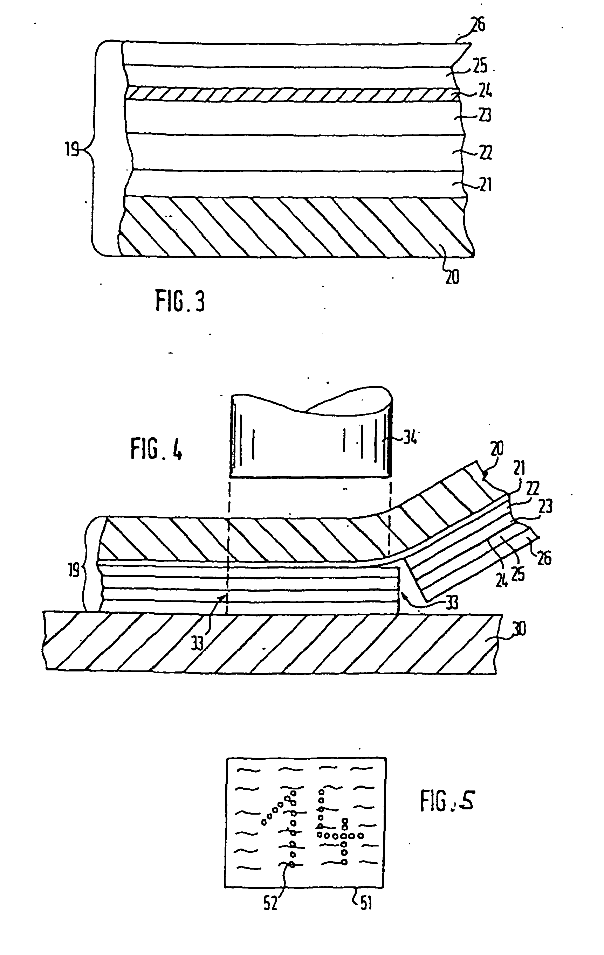

- Fig. 4: Verfahrensablauf zur Herstellung vom Volumen-Film-Hologrammen

### Verfahren zur Herstellung von Transferpräge-Hologrammen

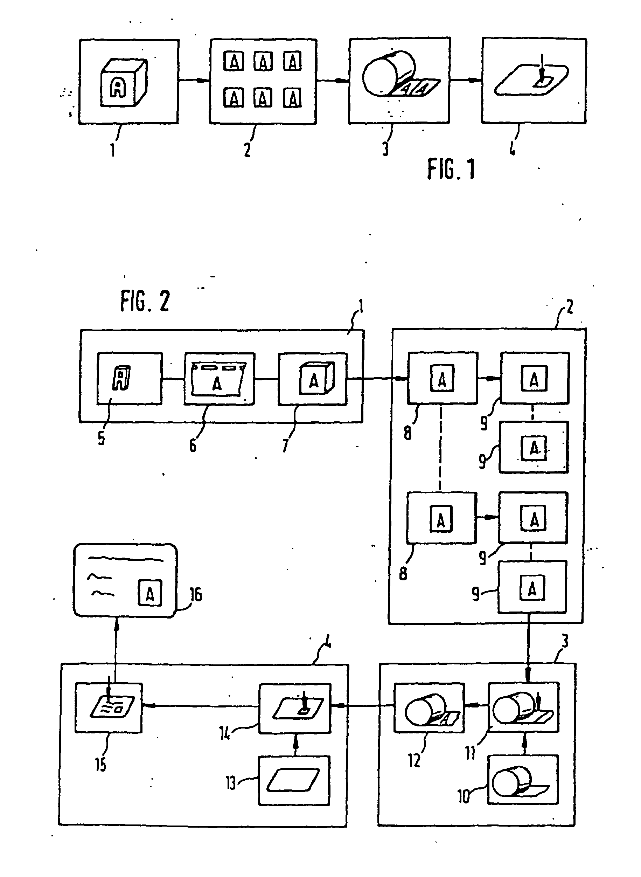

Fig. 1 zeigt die wesentlichen Stufen der Anfertigung von Prägehologrammen und deren Aufbringung auf Datenträgern im Transferverfahren, wie sie nach derzeitigem technischen Stand üblich sind. Das Verfahren gliedert sich somit in
- Anfertigung eines Prägemasters (Pos. 1, Fig. 1),
- Abformen von identischen Prägematrizen (Pos. 2, Fig. 1),
- Prägen der Hologramme auf Transferbänder (Pos. 3, Fig. 1) und
- Übertragen der Hologramme auf das Produkt (Pos. 4, Fig. 1).

Die einzelnen Verfahrensschritte unterscheiden sich bekanntermaßen technologisch so stark voneinander, daß sie in völlig verschiedenen Produktionsbereichen ablaufen. Wegen der Komplexität dieser Verfahrensschritte werden diese sehr häufig sogar in völlig getrennten Industriebetrieben realisiert. Der Übergang von einem Produktionsbereich zum anderen erfolgt an den technologischen Schnittstellen, an denen das Zwischenprodukt als definiertes Halbzeug vorliegt.

Jede dieser in Fig. 1 angedeuteten vier Verfahrensstufen hat technologische Schwerpunkte. So ist in der Stufe 1 der Prägemastererstellung die eigentliche Fototechnik bzw. Holographietechnik dominant. In diesem Bereich der von der Struktur her mit einem Filmstudio vergleichbar ist, werden die holographisch wiederzugebenden Objekte im Modell (meist im Maßstab 1 : 1) hergestellt, das Filmmaterial holographisch belichtet, die Hologramme (Filme) auf unterschiedliches Filmmaterial kopiert, entwickelt etc. sowie die ersten Prägemaster erstellt. Auf dem Prägemaster liegt das Hologramm in einer feinen Oberflächenreliefstruktur vor, die sich durch mechanisches Abprägen in ausreichend glatte und verformbare Materialien duplizieren läßt. Da beim Abprägen der Reliefstruktur das Relief hohen mechanischen Belastungen und somit auch hohem Verschleiß ausgesetzt ist, benutzt man für die Vervielfältigung der Hologramme üblicherweise jedoch nicht den Prägemaster selbst, sondern davon abgeleitete Prägematrizen. Da auch das Abformen der Prägematrizen von einem Original (Prägemaster) nur begrenzt wiederholbar ist, werden diese in mehrstufigen Verfahren über sogenannte Submaster oder Sub-Submaster etc. erstellt.

Das Abformen der Prägematrizen vom Prägemaster, dem Submaster oder dergleichen erfolgt üblicherweise auf galvanoplastischem Wege. Die dafür notwendigen Verfahrensschritte sind hinlänglich bekannt und sollen hier nicht näher beschrieben werden. Erwähnenswert scheint in diesem Zusammenhang lediglich die Tatsache, daß die in dieser zweiten Produktionsstufe (Pos. 2, Fig. 1) notwendigen Fertigungsbedingungen mit denen der chemischen Industrie gleichzusetzen sind. Die in dieser Verfahrensstufe verwendeten Produktionseinrichtungen bestehen in erster Linie aus galvanischen Bädern, in denen in entsprechenden Elektrolytlösungen von Metallsalzen und chemischen Zusatzstoffen unter Einwirkung von elektrischem Gleichstrom metallische Schichten erzeugt werden, die das Masterrelief wiedergeben.

Nach Vorliegen der Prägematrizen werden diese in der dritten Verfahrensstufe (Pos. 3, Fig. 1) in Prägeautomaten zur Übertragung des Reliefs auf Kunststoffoberflächen etc. benutzt. In einer für das erfindungsgemäße Verfahren bevorzugten Ausführungsvariante werden die Reliefstrukturen in standardisierte, sogenannte Transferbänder eingeprägt, die wiederum als Halbzeug zwischengelagert und auf den späteren "Produkten" in unterschiedlichster Weise Verwendung finden können.

Im Grundsatz ist die Aufbringung des holographischen Reliefs auf das Produkt in ein- oder zweistufigen Verfahren möglich. Bei einstufigen Verfahren wird die Reliefstruktur des Hologramms direkt auf die Oberfläche des mit dem Hologramm auszustattenden Produktes aufgeprägt. Je nach Beschaffenheit des Produktes verbietet sich diese Vorgehensweise aber in vielen Fällen, da das Prägen nur auf glatte verformbare Oberflächen unter Einwirkung von hohem Flächendruck möglich ist. Aus diesem Grunde, aber auch aufgrund der höheren Flexibilität, wird deshalb in der Praxis in der Regel das zweistufige Verfahren gewählt, bei dem das Relief zuerst auf einem Zwischenmedium, z. B. einem Transferband, erzeugt und in dieser Form auf dem Produkt aufgeklebt, aufgesiegelt oder dergleichen fixiert wird. Obwohl das erfindungsgemäße Prinzip bei beiden Versionen nutzbar wäre, wird die zweistufige Variante bevorzugt, da bei dieser Ausführungsform eine größere Variationsbreite gegeben ist. Dies gilt insbesondere auch dann, wenn als Zwischenmedium ein Transferband Verwendung findet.

Die Herstellung der Transferbänder erfolgt je nach gefordertem Aufbau bzw. je nach gewünschter Hologrammqualität und Sicherheitsstandard ebenfalls in mehreren Einzelschritten. In diesem Prozeß werden mehrschichtige neutrale Folienbänder vorbereitet, in die die Hologramme aneinandergereiht eingeprägt werden. Anschließend erfolgt eine Zusatzbeschichtung der geprägten Bänder, um die feine Reliefstruktur vor mechanischen Beschädigungen, aber auch vor eventuellen Manipulationen zu schützen. In dieser dritten Verfahrensstufe (Pos. 3, Fig. 1) finden wegen der geforderten Qualität und der Feinheit der zu erzeugenden Strukturen aufwendige und komplexe mechanische Produktionsautomaten Anwendung. Die in dieser Verfahrensstufe verwendete technische Ausrüstung entspricht im wesentlichen der in der Feinmechanik sowie der Druck- und Kunststofftechnik üblichen.

In der vierten Stufe (Pos. 4, Fig. 1) erfolgt der Transfer des fertiggestellten Hologramms vom Transferband auf das spätere Produkt. Im vorliegenden Fall werden als Produkt vorzugsweise Ausweiskarten, Wertpapiere, Banknoten etc. genannt. Die Verwendung auf Videokassetten, Schallplatten, Etiketten der Bekleidungsindustrie etc. ist aber ebenso sinnvoll und denkbar. Die Übertragung des Hologramms wird ähnlich wie in der dritten Verfahrensstufe in hochautomatisierten Produktionseinrichtungen vorgenommen. Im Gegensatz zur Stufe drei (Pos. 3, Fig. 1) sind hier jedoch auch die.produktspezifischen Aspekte, z. B. die der Wertpapier- oder Kartentechnologie, mit einzubeziehen. Um eine Beeinträchtigung der Qualität von Hologramm- und/oder Produkt durch den Transfer zu vermeiden, sind die jeweils in Wechselbeziehung stehenden Parameter beider Elemente, wie z. B. Materialeigenschaften, Verarbeitungstemperaturen, mechanische Belastbarkeit etc. entsprechend zu berücksichtigen bzw. aufeinander abzustimmen. Unterschiedliche Produkte können somit in diesem Sinne auch zum Teil sehr unterschiedliche Maßnahmen bei der Aufbringung der Hologramme erforderlich machen. Der Transfer der Hologramme findet in der Regel entweder beim Produkthersteller selbst oder aber bei Zulieferanten statt, die für das Produkt die Verpackung, Etiketten oder dergleichen herstellen.

Die in Fig. 1 dargestellten Verfahrensblöcke werden im folgenden anhand der Fig. 2 näher erläutert.

### Fertigung des Prägemasters

Von dem später darzustellenden Objekt wird in der Regel ein räumliches Modell erstellt, das für die derzeit gebräuchlichen Holographietechniken im Maßstab 1 : 1 vorliegen muß. Der hierfür notwendige Verfahrensschritt ist in Fig. 2 mit Pos. 5 gekennzeichnet. Nach Vorliegen des Modells wird in Zwischenschritt 6 ein laserrekonstruierbares Hologramm auf einem Silberschichtfilm hergestellt. Dieses auch als Primärhologramm bezeichnete Hologramm wird anschließend, um das holografische Bild auch mit weißem Licht (ohne Laser) betrachten zu können, in der sogenannten Regenbogentechnik auf einen zweiten Hologrammfilm umkopiert. Als lichtempfindliches Material werden bei diesem Kopiervorgang vorzugsweise Fotoresistschichten verwendet. Durch diese Maßnahme wird das im Primärhologramm als Grauwertstruktur vorliegende Hologramm in ein Oberflächenrelief umgewandelt. Das derart erzeugte Hologramm wird üblicherweise als Sekundärhologramm bezeichnet. Im letzten Zwischenschritt 7 der Verfahrensstufe 1 wird vom Sekundärhologramm auf elektrogalvanischem Wege der sogenannte Prägemaster erstellt, bei dem die holografische Information ebenfalls in Form eines Oberflächenreliefs vorliegt.

### Abformen von Prägestempeln

Der in Zwischenschritt 7 gefertigte Prägemaster stellt ein teures Unikat dar und wird wegen der Verletzungs- und Abnutzungsgefahr im allgemeinen nicht zum Prägen von Hologrammen verwendet. Vielmehr werden in einem zwei- oder mehrstufigen Verfahren vom Master wiederum auf elektrogalvanischem Wege sogenannte Submaster (Zwischenschritt 8) und davon die eigentlichen Prägematrizen abgeformt (Zwischenschritt 9). Ausgehend vom Master liegen die Submaster als Negativreliefs vor. Vom Submaster werden als Positivrelief die eigentlichen Prägematrizen erstellt, die dann zum Prägen des Oberflächenreliefs in ein plastisches Material Verwendung finden. Die Lebensdauer einer Prägematrize beträgt selten mehr als 10 000 Prägungen, weshalb bei großen Auflagezahlen eine beträchtliche Anzahl von derartigen Prägematrizen herzustellen ist.

### Anfertigen des Transferbandes

Das Transferband ist mehrschichtig aufgebaut und besteht zumindest aus einer Trägerschicht und einer erneut mehrschichtig ausgebildeten Prägeschicht. Die Herstellung des Transferbandes erfolgt in mehreren Verfahrensschritten, die in Fig. 2 in eine Vorbereitungsstufe 10, die Hologramm-Prägestufe 11 sowie die Nachbearbeitungsphase 12 untergliedert sind.

In der Vorbereitungsstufe 10 wird das Trägerband mit einem prägbaren Material beschichtet und zwar derart, daß beim späteren Transfervorgang eine Trennung unter Wärme- und Druckeinwirkung problemlos möglich ist. In einfachsten Fall erreicht man dies durch Vorsehen einer Wachsschicht zwischen dem Trägerband und der prägbaren Kunststoffschicht. In den Fällen, in denen das Hologramm in Reflexion erkennbar sein soll, wird auf oder unter der Prägeschicht eine weitere Metallschicht mit hohem Reflexionsvermögen vorgesehen.

In der Fertigungsstufe 11 wird mit Hilfe der im Zwischenschritt 9 erzeugten Prägematrizen die Reliefstruktur in die prägbare Kunststoffbeschichtung eingepreßt. Anschließend wird das so erzeugte Oberflächenrelief mit mindestens einer Schutzschicht abgedeckt, die das Relief vor mechanischen Beschädigungen schützt. Diese Schutzschicht ist mit dem Material der prägbaren Schicht derart abzustimmen, daß die optischen Eigenschaften des Hologramms so wenig wie möglich beeinträchtigt werden. Aus verschiedenen hier nicht zu erläuternden Gründen werden über der ersten Schutzschicht weitere für den Schutz des Hologramms notwendige Schichten aufgebracht. Als letzte Schicht wird schließlich eine.Heißklebeschicht vorgesehen, die den problemlosen Transfer und das Anhaften des Hologramms auf dem späteren Produkt sicherstellt.

### Transfer auf das Produkt

Die Übertragung der Hologramme auf das Produkt, z. B. Karten, Wertpapiere oder dergleichen, geschieht, wie bereits erwähnt, in der Verfahrensstufe 4. Ähnlich wie bei der Herstellung des Transferbandes wird auch hier in einem Zwischenschritt 13 ein neutrales Halbzeug vorbereitet. Im Fall der Ausweiskarte ist dies der fertige Kartenrohling, bei dem das bedruckte Karteninlett bereits mit Deckfolien beschichtet und, falls notwendig, mit Magnetstreifen, Unterschriftsstreifen und dergleichen ausgestattet ist. Die in dieser Form vorliegenden Kartenrohlinge weisen üblicherweise allerdings noch keine personenbezogenen Daten des späteren Karteninhabers auf.

Die Übertragung des Hologramms vom Transferband geschieht im Zwischenschritt 14, in dem in einem sogenannten Heißprägeautomaten das Hologramm über dem zu plazierenden Bereich der Karte positioniert und mit Hilfe eines heißen Prägestempels auf die Karte aufgepreßt wird. Durch Abziehen des Trägerbandes reißt der das Hologramm enthaltende'Mehrschichtaufbau genau an der Umrißlinie des Prägestempels und löst sich somit vom Transferband. Die derart mit einem Hologramm ausgestattete Karte wird im Zwischenschritt 15 mit den benutzerbezogenen Daten ausgestattet, beispielsweise mittels eines Laserpersonalisierungsverfahrens.

Am Ende dieses Produktionsverfahrens steht die fertige Karte 16, die, wie in Fig. 2 schematisch dargestellt, nun mit einem plazierten Hologramm 17 und den aus benutzerbezogenen und neutralen Daten bestehenden Datensatz 18 ausgestattet sind.

In Fig. 3 ist das Transferband 19 im Schnitt dargestellt. Es besteht aus einem Trägerband 20, auf dem eine Trennschicht 21 aus Wachs aufgebracht ist. Darüber befindet sich eine Schutzschicht 22 und eine Schicht aus thermoplastischem Material 23, welches etwas weniger wärmeempfindlich als die Trennschicht 21 ist. Das thermoplastische Material 23 ist mit einer dünnen, nicht tragfähigen Metallschicht 24 bedeckt, die vorzugsweise aus aurgedampften Aluminium besteht und wenigstens weniger als 5 000 Angström Dicke aufweist. Zur Herstellung von transparenten Hologrammen wird auf die Metallschicht 24 verzichtet. Die Schichten 20 - 24 stellen ein Halbzeug dar (Rohband), in das die Reliefstruktur eingeprägt wird.

Um das Oberflächenreliefmuster einzuprägen, wird eine beheizte Prägematrize auf die Metallschicht 24 aufgepreßt. Unter Druck- und Wärmeeinwirkung gibt das thermoplastische Material 23 nach, wodurch sich das Reliefmuster in die Aluminiumschicht 24 einprägt. Anschließend werden auf die Metallschicht 24 eine zweite Schutzschicht 25 und eine Heißklebeschicht 26 aufgetragen. In speziellen Varianten sind die Schichten 25 und 26 auch zu einer Schicht zusammengefaßt. Das so hergestellte Material stellt ein Zwischenprodukt dar, das sich ebenfalls als Halbzeug leicht lagern und transportieren läßt.

Zum Aufbringen des Hologramms auf das Produkt wird das Transferband 19, wie in Fig. 4 gezeigt, mit der Heißklebeschicht 26 auf ein Substrat 30, beispielsweise einer Karte, aufgelegt und angepreßt. Das Anpressen erfolgt mit einem beheizten Transferstempel 34 oder alternativ auch mit einer Transferrolle. Unter der Druck- und Wärmeeinwirkung verbindet sich die Heißklebeschicht 26 mit dem Substrat 30, gleichzeitig schmilzt die Trennschicht 21 und ermöglicht das Abziehen des Trägermaterials 20. Die Verbindung mit dem Substrat 30 und das Abtrennen des Trägers 20 erfolgt nur in den Flächenbereichen, in denen die Trennschicht 21 erhitzt ist, d. h. nur exakt unterhalb des Transferstempels 34. In den anderen Flächenbereichen bleibt der Schichtaufbau und das Trägermaterial fest miteinander verbunden. Da der Schichtaufbau 22 - 26 entlang der Konturkanten des Transferstempels 34 beim Abziehen des Trägerfilms vom Substrat reißt, entspricht die Kontur des derart transferierten Hologramms stets der Kontur des Prägestempels, wobei auf diese Weise auch kompliziertere Umrißstrukturen realisierbar sind. Der Prozeß des Heißsiegelns ist jedoch bekannt und wird beispielsweise in der DE-OS 33 08 831 beschrieben.

### Individualisierungsmaßnahme D (am fertigen Transferband)

Nach vollständiger Fertigstellung des beispielsweise in Fig. 3 dargestellten Transferbandes 19 sind verschiedene weitere Individualisierungsmöglichkeiten gegeben. Die Individualisierung in diesem Verfahrensstadium ist besonders günstig, da das Transferband in dieser Ausführungsform einerseits als fertiges Zwischenprodukt vorliegt und andererseits durch die in diesem Verfahrensstadium vorhandenen Schutzschichten relativ gut vor Beschädigungen geschützt ist.

Die Individualisierungsmaßnahmen beruhen in erster Linie auf dem Einschreiben von individuellen Daten auf eine oder mehrere Schichten des Transferbandes oder durch eine irreversible Umwandlung oder einen Abtrag des Schichtmaterials.

Zum Einschreiben von Daten bietet sich unter anderem die erfindungsgemäße Laserbeschriftung an. Hierbei werden mit einem Laserbeschrifter durch die Trägerfolie 20 oder durch die Schutzlackschicht 26 hindurch irreversible Veränderungen oder Zerstörungen im Schichtaufbau hervorgerufen, wie z. B. eine Schwärzung, eine Zerstörung der Beugungsstruktur, ein Abtragen der Metallschicht usw.. Je nach ihrer Lage im Schichtaufbau sind die eingeschriebenen Muster auf der fertigen Hologrammkarte direkt sichtbar oder unter der Metallschicht 24 verborgen.

Die Laserbeschriftung beruht auf der Absorption der Laserstrahlung in dem zu beschriftenden Medium. Übliche Reflexionshologramme eignen sich, wie festgestellt werden konnte, in der Regel sehr gut für derartige Beschriftungen. In den Fällen, in denen die Laserbeschriftbarkeit nicht ausreicht, was insbesondere bei Transmissionshologrammen der Fall sein kann, ist eine Verbesserung der Beschriftungsqualität möglich, indem absorbierende Farben oder Zusätze in eine oder mehrere Schichten des Transferbandes eingefügt werden. Auf diese Weise können auch spezielle Schichten des Transferbandes in besonderer Weise sensibilisiert werden, so daß bei richtiger Dimensionierung der Laserenergie auch diese Schichten gezielter zu beeinflussen sind.

Bei hohen Laserleistungen kommt es wegen der geringen Dicke der Einzelschichten in der Regel zur völligen Materialverdampfung oder Plasmabildung über den gesamten Schichtaufbau. Auf diese Weise lassen sich Beschriftungen des Transferbandes erzielen, die, unabhängig von welcher Seite sie eingebracht werden, auf dem fertigen Produkt stets eindeutig erkennbar und nachträglich nicht mehr veränderbar sind. Dieser Aspekt ist insbesondere dann von besonderem Interesse, wenn die eingebrachten Daten in fälschungssicherer Form vorliegen sollen.

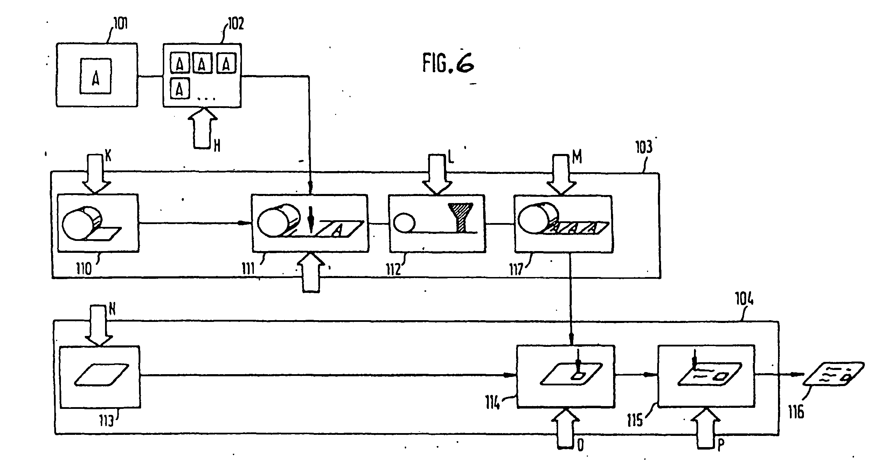

Alternativ zur erfindungsgemäßen Laserbeschriftung besteht auch die Möglichkeit einer mechanischen Perforierung des Transferbandes (Fig. 5). Hierzu wird die Folie im Bereich des Hologramms mit strukturierten Lochungen mit Hilfe eines Art Nadeldruckers oder mit einem Stanzbild versehen, das durch ein fest vorgegebenes Stanzwerkzeug erstellt wird. Für besonders komplizierte, gegebenenfalls auch von Hologramm zu Hologramm variierende Perforationen ist auch der Einsatz von Gravurmaschinen möglich, die den Materialabtrag mit Hilfe eines xy-gesteuerten Gravurstichels erzeugen.

Die für die Laserbeschriftung oder den mechanischen Materialabtrag verwendbaren Vorrichtungen sind dem Fachmann bekannt und müssen hier nicht näher erläutert werden.

### Individualisierung von Volumen-Film-Hologrammen

Wie einleitend erwähnt, sind die erfindungsgemäßen Individualisierungsmaßnahmen bei Transfer-Prägehologrammen besonders gut einsetzbar und im Produktionsprozeß gut integrierbar. Die erfindungsgemäße Anwendung ist jedoch nicht auf diesen Hologrammtyp beschränkt. Im folgenden wird die Nutzung der erfindungsgemäßen Gedanken im Zusammenhang mit Volumen-Film-Hologrammen beschrieben.

Die wesentlichen Stufen der Serienherstellung von Volumenholorammen umfassen
- die Anfertigung eines Primärhologramms,
- die Vervielfältigung der Hologramme durch Kopieren,
- das Aufbringen der Hologramme auf ein Substrat.

Anhand der Fig. 6 werden die Verfahrensschritte im folgenden näher erläutert, wobei aufbauend auf die in Fig. 2 genannten Details weitgehend nur auf die Abweichungen beider Verfahren eingegangen wird.

In der Verfahrensstufe 101 wird von einem Modell ein Hologramm auf einem fotosensitiven Material aufgezeichnet. Dies geschieht in üblicher Technik, indem ein Referenzstrahl mit einem Objektstrahl auf einer Fotoplatte überlagert wird. Nach dem Entwickeln und Fixieren stellt diese Fotoplatte das Primärhologramm dar.

Vom Primärhologramm, das dem Prägemaster entspricht, könnten nun beliebige Kopien gezogen werden, ohne daß der beim Prägehologramm notwendige Zwischenschritt Submaster notwendig wäre, da das Kopieren der Sekundärhologramme ein rein optischer Vorgang ist, der das Primärhologramm mechanisch nicht belastet.

Insbesondere wenn vom Primärhologramm zu unterschiedlichen Zeitpunkten größere Mengen von Kopien zu erstellen sind, ist es jedoch empfehlenswert, um Beschädigungen jeder Art, insbesondere durch Verkratzen etc., auszuschließen, vom Primärhologramm als Arbeitsexemplare Sekundärhologramme zu erstellen, die dann für den späteren Belichtungsvorgang des endgültigen Hologrammfilms im Verfahrensscshritt 111 verwendet werden.

Die Erstellung der Sekundärhologramme erfolgt nach gängiger Technik im Zwischenschritt 102 und ist in etwa vergleichbar mit der Herstellung der Submaster bzw. der Prägematrizen, nur daß dabei kein Fotoresistmaterial, sondern übliche Hologrammfilme Verwendung finden.

Im Zwischenschritt 110 werden die für das Volumenhologramm benötigten Filme erstellt. Holographiefilme bestehen, wie in der Fototechnik allgemein üblich, aus mindestens zwei Schichten, nämlich einem Trägermaterial, z. B. einem Polyesterfilm, und einer lichtempfindlichen Emulsion.

Ein derart vorgefertigter Film wird genau wie im Verfahrensschritt 102 auch im Verfahrensschritt 111 zur Erzeugung des auf dem Produkt zu verwendenden Hologramms belichtet. Dies geschieht in bekannter Weise, in dem der ursprüngliche holographische Aufbau, der bei der Belichtung des Primärhologramms genutzt wurde, zur Anwendung kommt, nur daß das Objekt nun gegen den Hologrammfilm ausgetauscht wird. Ein konjugierter (in Zeit und Richtung umgekehrter) Referenzstrahl wird dabei auf das Sekundärhologramm gerichtet. Dadurch wird an der ursprünglichen Position des Objekts ein reelles Bild erzeugt. Mit Hilfe eines zweiten Referenzstrahls wird das virtuelle Bild auf dem Hologrammfilm aufgezeichnet. Durch maschinelles Wiederholen des Kopiervorganges lassen sich somit beliebig viele Hologramme in Serienfertigung erstellen.

Nach dem Belichten wird der Film in Zwischenstufe 112 entwickelt und fixiert. Außerdem können zusätzliche Schichten, wie z. B. eine Schutzschicht, Klebeschicht etc., aufgebracht werden.

Die Zwischenstufe 117 ist für eventuelle Maßnahmen am fertigen Film vorgesehen. Sie steht in völliger Analogie zur Prägehologramm-Transferbandbearbeitung.

Die Vorbereitung des Substrats erfolgt in Verfahrensschritt 113. Auch diese Maßnahmen sind analog zum Prägehologramm zu sehen.

In Verfahrensschritt 114 wird das Hologramm auf dem Substrat aufgebracht. Je nach Substrat und Verwendungszweck sind für die Fixierung des Hologramms auf dem Substrat unterschiedliche Befestigungsmöglichkeiten gegeben. Gängige Techniken wären in diesem Zusammenhang das Aufkleben auf dem Substrat oder das Einkaschieren in den Schichtaufbau mehrlagiger Substrate, wie z. B. Ausweiskarten. In jedem Fall wird hierfür das Hologramm aus dem Film ausgestanzt und auf dem Substrat plaziert.

Die Bearbeitung des Endproduktes erfolgt in Verfahrensschritt 115. Die dort anfallenden Maßnahmen sind in Analogie zu den für Prägehologramme notwendigen-Schritten zu sehen.

### Individualisierungsmaßnahmen bei Volumen-Film-Hologrammen

Die für die Individualisierung von Volumen-Hologrammen verwendbaren Individualisierungsmaßnahmen, sind den im Zusammenhang mit Prägehologrammen beschriebenen ebenfalls sehr ähnlich.

### Anwendungsspektrum

Individualisierte Hologramme besitzen ein weites Anwendungsspektrum, das im folgenden danach unterschieden wird, wie die Hologramme auf dem späteren Endprodukt vorliegen. Übliche Praxis ist es, Hologramme auf der Oberfläche von Datenträgern aufzubringen. Die Datenträger können dabei eine Papieroberfläche aufweisen, wie beispielsweise Banknoten, Ausweispapiere, Wertpapiere und dergleichen, aber auch eine Kunststoffoberfläche, wie Ausweiskarten, Kunststoff-Banknoten, Videokassetten usw.. In speziellen Ausführungsformen kann das Hologramm auf Teilbereiche des Produktes begrenzt, in anderem aber auch die gesamte Oberfläche des Produktes abdecken. Gerade im Bereich der Ausweiskarten und Kreditkarten sind diese unterschiedlichen Varianten inzwischen übliche Praxis. Holographische Elemente lassen sich aber auch in die Produkte einlagern. So ist es bekannt, Hologramm in mehrlagige Kunststoffkarten mit einzukaschieren. Das Hologramm kann dabei in vielfältigen Ausführungsformen vorliegen, wie beispielsweise als Sicherheitsfaden, in Form eines Logos, eines integrierten Bildmotivs oder dergleichen. Das Einbringen kann aber auch in einer Art Montagetechnik erfolgen, bei der in einer Folienlage einer mehrschichtigen Karte eine Öffnung zum Einkleben des Hologramms vorgesehen ist.

Darüber hinaus ist es ebenfalls möglich, holographische Elemente direkt in Papier einzubetten, wobei das holographische Material vorzugsweise in Form von Bändern, Streifen oder Planchetten geschnitten vorbereitet wird. Diese Elemente sind vorzugsweise bei der Herstellung des Papiers zuzufügen, wobei die Sicherungstechnik besonders wirkungsvoll ist, wenn sie beispielsweise in Form eines "Fenster-Sicherheitsfadens" im Papier vorliegt.

## Patentansprüche

1. Optisch variables Element mit Beugungsstrukturen zur Aufbringung auf Datenträger im Transferverfahren, das ein human prüfbares Echtheitsmerkmal bildet, wobei das optisch variable Element direkt sichtbare Muster aufweist, die durch irreversible Zerstörung der Beugungsstruktur im Schichtaufbau des optisch variablen Elements mit einem Laser erzeugt sind.

2. Optisch variables Element nach Anspruch 1, **dadurch gekennzeichnet, daß** die Muster in Form von vollkommenen Entfernungen von Teilbereichen des Schichtaufbaus des optisch variablen Elements vorliegen.

3. Optisch variables Element nach wenigstens einem der Ansprüche 1 oder 2, **dadurch gekennzeichnet, daß** die Muster eine Numerierung darstellen.

4. Optisch variables Element nach wenigsten einem der Ansprüche 1 bis 3, **dadurch gekennzeichnet, daß** eine oder mehrere Schichten des optisch variablen Elements Laserstrahlung absorbierende Farben oder Zusätze enthalten.

5. Optisch variables Element nach wenigstens einem der Ansprüche 1 bis 4, **dadurch gekennzeichnet, daß** das optisch variable Element eine prägbare Kunststoffschicht und eine auf oder unter der Kunststoffschicht angeordnete Metallschicht aufweist.

6. Optisch variables Element nach Anspruch 5, **dadurch gekennzeichnet, daß** die Metallschicht eine gegenüber der Kunststoffschicht reduzierte Fläche aufweist.

7. Optisch variables Element nach Anspruch 5 oder 6, **dadurch gekennzeichnet, daß** die Metallschicht aus Aluminium, Kupfer, Silber oder Gold besteht.

8. Optisch variables Element nach wenigsten einem der Ansprüche 5 bis 7, **dadurch gekennzeichnet, daß** die Metallschicht als feines Raster oder teildurchlässig ausgebildet ist, und daß unter der Metallschicht im Schichtaufbau des optisch variablen Elements ein Druckbild vorgesehen ist.

9. Optisch variables Element nach Anspruch 8, **dadurch gekennzeichnet, daß** das Druckbild aus einer transparenten Farbe, lumineszierenden Farbe oder einer im infraroten oder ultravioletten Spektralbereich reflektierenden Farbe besteht.

10. Optisch variables Element nach Anspruch 5, **dadurch gekennzeichnet, daß** die Metallschicht als IR-durchlässige Schicht ausgebildet ist, unter der Metallschicht eine Schutzlackschicht angeordnet ist, die im sichtbaren Spektralbereich undurchlässig schwarz erscheint und im IR-Bereich transparent oder teildurchlässig ist, und daß unter der Schutzlackschicht ein Druckbild aus IR-reflektierender Farbe angeordnet ist.

11. Optisch variables Element nach wenigsten einem der Ansprüche 8 bis 10, **dadurch gekennzeichnet, daß** das Druckbild als Maschinencode, insbesondere als Barcode vorliegt:

12. Optisch variables Element nach wenigsten einem der Ansprüche 1 bis 11, **dadurch gekennzeichnet, daß** das optisch variable Element eine individuelle Umrißform aufweist.

13. Optisch variables Element nach wenigsten einem der Ansprüche 1 bis 12, **dadurch gekennzeichnet, daß** mindestens eine der Schichten des optisch variablen Elements mit einem Farbstoff oder Farbzusatz eingefärbt ist.

14. Optisch variables Element nach Anspruch 13, **dadurch gekennzeichnet, daß** die Farbzusätze oder Farbstoffe als transparente, lumineszierende oder absorbierende Stoffe ausgebildet sind.

15. Optisches variables Element nach wenigsten einem der Ansprüche 1 bis 14, **dadurch gekennzeichnet, daß** das optisch variable Element eine oder mehrere Teilflächen aufweist, die nicht lichtbeugend ist/sind.

16. Optisch variables Element nach Anspruch 15, **dadurch gekennzeichnet, daß** das optisch variable Element eine Metallschicht aufweist, die ebenfalls in den nicht lichtbeugenden Bereichen vorliegt.

17. Transferband mit einem Trägermaterial und einem darauf aufgebrachten Schichtaufbau eines optisch variablen Elements nach wenigsten einem der Ansprüche 1 bis 16.

18. Transferband nach Anspruch 17, **dadurch gekennzeichnet, daß** das Transferband eine Klebeschicht aufweist.

19. Transferband nach Anspruch 18, **dadurch gekennzeichnet, daß** die Klebeschicht als Muster vorliegt.

20. Transferband nach wenigsten einem der Ansprüche 17 bis 19, **dadurch gekennzeichnet, daß** im Schichtaufbau des optisch variablen Elements eine thermoplastische Schicht (23) vorgesehen ist, auf welche verschiedene Metalle aufgedampft sind.

## Claims

1. An optically variable element having diffraction structures for application to data carriers by the transfer method which forms a humanly testable authenticity feature, whereby the optically variable element has directly visible patterns which are produced with a laser by irreversible destruction of the diffraction structure in the layer structure of the optically variable element.

2. The optically variable element according to claim 1, **characterized in that** the patterns are present in the form of complete removals of partial areas of the layer structure of the optically variable element.

3. The optically variable element according to at least one of claims 1 and 2, **characterized in that** the patterns constitute a numbering.

4. The optically variable element according to at least one of claims 1 to 3, **characterized in that** one or more layers of the optically variable element contain inks or additives absorbing laser radiation.

5. The optically variable element according to at least one of claims 1 to 4, **characterized in that** the optically variable element has an embossable plastic layer and a metal layer disposed on or under the plastic layer.

6. The optically variable element according to claim 5, **characterized in that** the metal layer has a reduced area compared with the plastic layer.

7. The optically variable element according to claim 5 or 6, **characterized in that** the metal layer consists of aluminum, copper, silver or gold.

8. The optically variable element according to at least one of claims 5 to 7, **characterized in that** the metal layer is formed as a fine screen or to be partly transmitting, and a printed image is provided under the metal layer in the layer structure of the optically variable element.

9. The optically variable element according to claim 8, **characterized in that** the printed image consists of transparent ink, luminescent ink or ink reflecting in the infrared or ultraviolet spectral region.

10. The optically variable element according to claim 5, **characterized in that** the metal layer is formed as an IR-transparent layer, the metal layer has disposed thereunder a protective lacquer layer which appears opaque black in the visible spectral region and is transparent or partly transmitting in the IR region, and a printed image of IR-reflective ink is disposed under the protective lacquer layer.

11. The optically variable element according to at least one of claims 8 to 10, **characterized in that** the printed image is present as a machine code, in particular a bar code.

12. The optically variable element according to at least one of claims 1 to 11, **characterized in that** the optically variable element has an individual outline form.

13. The optically variable element according to at least one of claims 1 to 12, **characterized in that** at least one of the layers of the optically variable element is colored with a dye or color additive.

14. The optically variable element according to claim 13, **characterized in that** the color additives or dyes are formed as transparent, luminescent or absorbent substances.

15. The optically variable element according to at least one of claims 1 to 14, **characterized in that** the optically variable element has one or more partial areas that are not light-diffractive.

16. The optically variable element according to claim 15, **characterized in that** the optically variable element has a metal layer which is likewise present in the non-light-diffractive areas.

17. A transfer band having a supporting material and applied thereto a layer structure of an optically variable element according to at least one of claims 1 to 16.

18. The transfer band according to claim 17, **characterized in that** the transfer band has an adhesive layer.

19. The transfer band according to claim 18, **characterized in that** the adhesive layer is present as a pattern.

20. The transfer band according to at least one of claims 17 to 19, **characterized in that** a thermoplastic layer (23) on which different metals are vaporized is provided in the layer structure of the optically variable element.

## Revendications

1. Élément optiquement variable avec des structures à diffraction destiné à être introduit sur des supports de données dans un procédé de transfert, formant une caractéristique d'authenticité susceptible d'être vérifiée par voie humaine, dans lequel l'élément optiquement variable présente des modèles directement visibles qui sont produits par destruction irréversible des structures à diffraction dans la structure à couches de l'élément optiquement variable au moyen d'un laser.

2. Elément optiquement variable selon la revendication 1, **caractérisé en ce que** les modèles sont présents sous forme d'un enlèvement total de zones partielles de la structure à couches de l'élément optiquement variable.

3. Elément optiquement variable selon la revendication 1 ou 2, **caractérisé en ce que** les modèles correspondent à une numérotation.

4. Elément optiquement variable selon au moins l'une des revendications 1 à 3, **caractérisé en ce qu'**une ou plusieurs couches de l'élément optiquement variable contiennent des couleurs ou des additifs absorbant le rayonnement du laser.

5. Elément optiquement variable selon au moins l'une des revendications 1 à 4, **caractérisé en ce que** l'élément optiquement variable comporte une couche de matière plastique estampable et une couche métallique disposée sur ou sous la couche de matière plastique.

6. Elément optiquement variable selon la revendication 5, **caractérisé en ce que** la couche métallique comporte une surface réduite par rapport à la couche en matière plastique.

7. Elément optiquement variable selon la revendication 5 ou 6, **caractérisé en ce que** la couche métallique est en aluminium, en cuivre, en argent ou en or.

8. Elément optiquement variable selon au moins l'une des revendications 5 à 7, **caractérisé en ce que** la couche métallique est conçue sous la forme d'une trame fine ou qu'elle est partiellement transparente et qu'une image imprimée est prévue sous la couche métallique, dans la structure à couches de l'élément optiquement variable.

9. Elément optiquement variable selon la revendication 8, **caractérisé en ce que** l'image imprimée est constituée d'une peinture transparente, luminescente ou d'une peinture réfléchissante dans le domaine spectral des infrarouges ou des ultraviolets.

10. Elément optiquement variable selon la revendication 5, **caractérisé en ce que** la couche métallique est conçue sous la forme d'une couche transparente aux IR, **en ce qu'**une couche de laque protectrice qui dans le domaine spectral visible est noire opaque et qui dans le domaine IR est transparente ou partiellement transparente est disposée sous la couche métallique et **en ce qu'**une image imprimée en peinture réfléchissant les IR est disposée sous la couche de laque protectrice.

11. Elément optiquement variable selon au moins l'une des revendications 8 à 10, **caractérisé en ce que** l'image imprimée se présente sous la forme d'un code machine, notamment d'un code barre.

12. Elément optiquement variable selon au moins l'une des revendications 1 à 11, **caractérisé en ce que** l'élément optiquement variable présente un contour de forme individuelle.

13. Elément optiquement variable selon au moins l'une des revendications 1 à 12, **caractérisé en ce qu'**au moins l'une des couches de l'élément optiquement variable est teintée à l'aide d'un colorant ou d'une addition de matière colorante.

14. Elément optiquement variable selon la revendication 13, **caractérisé en ce que** les additions de matière colorante ou les colorants sont conçus sous le forme de substances transparentes, luminescentes ou absorbantes.

15. Elément optiquement variable selon au moins l'une des revendications 1 à 14, **caractérisé en ce que** l'élément optiquement variable comporte une ou plusieurs surfaces partielles, qui n'est/ne sont pas diffractante(s) à la lumière.

16. Elément optiquement variable selon la revendication 15, **caractérisé en ce que** l'élément optiquement variable comporte une couche métallique, qui est également présente dans les domaines non diffractants à la lumière.

17. Bande de transfert avec une matière support et une structure en couches d'un élément optiquement variable selon au moins l'une des revendications 1 à 16, qui est appliquée sur cette dernière.

18. Bande de transfert selon la revendication 17, **caractérisée en ce que** la bande de transfert comporte une couche collante.

19. Bande de transfert selon la revendication 18, **caractérisée en ce que** la couche collante est présente sous forme de motif.

20. Bande de transfert selon au moins l'une des revendications 17 à 19, **caractérisée en ce qu'**une couche thermoplastique (23) sur laquelle différents métaux sont vaporisés est prévue dans la structure en couches de l'élément optiquement variable.
